# EUROPEAN PATENT SPECIFICATION

(11) **EP 0 688 502 B1**
(45) Date of publication and mention of the grant of the patent: **11.04.2001**
(21) Application number: 95303516.9
(22) Date of filing: 24.05.1995
(51) Int. Cl.: A21D 2/18, A21D 13/08, A23G 3/00

(54) **Food composition**
Nahrungszusammensetzung
Composition alimentaire

(30) Priority: 24.05.1994 GB 9410360
(43) Date of publication of application: 27.12.1995
(73) Proprietor: CERESTAR HOLDING BV, NL-4550 AA Sas Van Gent (NL)
(72) Inventor: Rapaille, Andre, Leon, Ivan, B-8300 Knokke (BE); Peremans, Johan, Augusta, Maria, Antoon, B-2930 Brasschaat (BE)
(74) Representative: Wilkinson, Stephen John

(56) References cited:
- EP-A- 0 489 515
- EP-A- 0 511 761
- DE-A- 2 530 164
- FR-A- 2 334 311
- US-A- 4 461 777
- US-A- 5 304 389
- DATABASE WPI Section Ch, Week 9108 Derwent Publications Ltd., London, GB; Class D13, AN 91-054413 & JP-A-03 004 746 (MEIJI SEIKA KAISHA) , 10 January 1991

## Description

The present invention relates to an edible composition containing a fat and a sweetener, for example the type of composition used as a cream filling in bakery and confectionery applications.

Conventional fat plus sweetener compositions comprise sucrose as the sweetener and are exemplified by butter cream fillings for cakes and biscuits. Such compositions, besides having a substantial calorie content, attributable to both fat and sugar, also have a fatty mouth feel. Although both of these characteristics have been and are accepted by the consumer it would be attractive to be able to provide an analogous cream filling which had a reduced fatty mouth feel particularly if, in addition, the composition also had a reduced calorie content.

There have of course been many proposals for reducing the calorie content of sugar containing foodstuffs by replacing part or all of the sugar by a substitute sweetener contributing fewer calories to the composition. Such substitute sweeteners include high intensity sweeteners such as saccharin and aspartame and sweeteners having a sweetness level of the same order as sucrose e.g., the so-called sugar alcohols.

The sugar alcohols are related to the sugars from which their name is derived. They are characterised by their sweet taste and by providing fewer calories on a weight for weight basis than the equivalent sugar. Well known sugar alcohol sweeteners include sorbitol, mannitol, xylitol, erythritol and maltitol all of which find commercial application in dietetic and reduced calorie foodstuffs.

United States Patent 4,461,777 discloses oil-in-water emulsions comprising edible fats and oils, milk proteins and/or vegetable protein. The shelf life of such emulsions is considerably increased through the addition of an antibacterial combination of amino acids and saccharides.

DE-A-2530164 discloses a method for producing dietetic foods comprising fat, protein, carbohydrates and additives. Fat and additives, which include sugars and sugar replacers, together make up less than about 60% of the composition.

EP-A-489515 discloses an improved method for preparing chocolates. Again fat and sugar replacers make up less than 80% of the composition.

JP-A-3004746 relates to a method of improvement of the eating taste of fat containing confectionery with the characteristic that erythritol is mixed in, and characterised in that the quantity of added erythritol is in the order of 5-25% of the fat containing confectionery. In particular it relates to a method of improvement of the eating taste of fat containing confectionery, that no cooling impression during eating is brought about and that no after-taste is left in the mouth.

United States Patent 5,304,389 relates to icing compositions for coating bakery products such as cakes, decorated cakes, doughnuts, pastries, rolls, cookies, biscuits and crackers. This patent discloses a solution to the flowability problems arising from the use of mixtures of sugars and fat. The problem is solved by using sugar of a well specified diameter when combined with fat.

The cited references do not relate to the preparation of fillings for confectionery products.

Two of the sugar alcohols, namely xylitol and erythritol, are also known to possess a cooling sensation in the mouth caused by their endothermic heat of solution. We have now found that this cooling sensation when experienced in eating a fat-containing composition has the effect of masking the fatty mouth feel thereby giving a more refreshing and attractive product. In addition, when used as the replacement sweetener in fat and sugar-containing compositions the calorie content of the composition is also reduced particularly with erythritol which has a caloric contribution of 0.4 Kcal/g as compared with the other sugar alcohols which contribute 2.4 Kcal/g.

Accordingly, the present invention provides a composition consisting essentially of a fat and a sweetener characterised in that
a) the composition contains erythritol and/or xylitol and fat in an amount of 95% (w/w) of the composition;
b) the composition contains 40 to 70% by weight erythritol and/or xylitol, based on the weight of fat plus erythritol and/or xylitol in the composition; for reducing the fatty mouth feel of said composition.

The percentages by weight of erythritol and/or xylitol used in this specification are based on the weight of fat plus erythritol and/or xylitol in the composition.

The invention is particularly applicable to compositions containing a relatively large proportion of fat and especially in compositions consisting essentially of fat and a sweetener. The sweetener in such compositions is conventionally glucose or sucrose which may be replaced totally or in part by erythritol and/or xylitol.

Compositions consisting essentially of fat and a sweetener (95% (w/w)) find application in confectionery and bakery as flavoured fillings. In such applications the composition may also contain small amounts, eg. up to 5 weight % of additives such as flavours, emulsifiers and preservatives.

The present invention therefor further relates to the use of the composition consisting essentially of fat and sweetener as fillings in bakery and confectionery products.

The present invention is applicable equally to compositions containing animal or vegetable fats eg. to butter compositions or to compositions containing margarine.

In order to maximise the smooth mouth-feel of compositions according to the invention it is preferred that the particle size of the erythritol and/or xylitol be less than 300 microns.

### Example 1

A series of compositions was prepared by blending a margarine, MIRA (from Debco, a Unilever subsidiary), with various sweeteners in a Hobart mixer operating at high speed for five minutes. The compositions contained the ingredients and the amounts as shown below

| Composition No. | | | | | | | | | | | | | | | | |
|---|---|---|---|---|---|---|---|---|---|---|---|---|---|---|---|---|
| Ingredients % w/w | 1 | 2 | 3 | 4 | 5 | 6 | 7 | 8 | 9 | 10 | 11 | 12 | 13 | 14 | 15 | 16 |
| Margarine | 50 | 40 | 50 | 40 | 50 | 40 | 50 | 40 | 50 | 40 | 50 | 40 | 50 | 40 | 50 | 40 |
| Sucrose | 50 | 60 | | | | | | | | | | | | | | |
| Xylitol | | | 50 | 60 | | | | | | | | | | | | |
| Erythritol | | | | | 50 | 60 | | | | | | | | | | |
| Crystalline Maltitol (99% pure) | | | | | | | 50 | 60 | | | | | | | | |
| Amorphous Maltitol (85-90% pure) | | | | | | | | | 50 | 60 | | | | | | |
| Sorbitol | | | | | | | | | | | 50 | 60 | | | | |
| Lactitol | | | | | | | | | | | | | 50 | 60 | | |
| Palatinit | | | | | | | | | | | | | | | 50 | 60 |

The amorphous maltitol contained sorbitol and minor amounts of higher hydrogenated oligosaccharides. The crystalline polyol ingredients were ground in a Bauermeister mill to a particle size less than 300 microns.
All of the compositions had a smooth texture and a similar melting profile in the mouth. The compositions containing xylitol or erythritol had a pleasant sweet taste whereas all the other compositions, including that based on sucrose, had a more fatty mouth feel.

The hardness of the compositions was measured by means of a Stevens Texture Analyser immediately after preparation and after one week of storage at ambient temperature. The hardness of all the compositions increased after one week of storage, those containing xylitol, erythritol and maltitol (both crystalline and amorphous powder) increased by a maximum of 15% whereas with the sorbitol, lactitol and Palatinit based compositions the increase in hardness was 45%.

### Example 2

Compositions were prepared as described in Example 1 having the following composition.

| Composition No. | | | | | | |
|---|---|---|---|---|---|---|
| Ingredients % w/w | 1 | 2 | 3 | 4 | 5 | 6 |
| Margarine | 40 | 40 | 40 | 40 | 40 | 40 |
| Sucrose | 60 | 60 | | | | |
| Xylitol | | | 60 | 60 | | |
| Erythritol | | | | | 60 | 60 |
| Vanillin | 0.2 | | 0.2 | | 0.2 | |
| Defatted S. | | 3 | | 3 | | 3 |
| "Defatted S" is defatted cocoa powder | | | | | | |

As in Example 1 the xylitol and erythritol were ground in a Bauermeister mill to a particle size less than 300 microns.
The calorie contents of the six compositions in Kcal/100 g were in order 1 to 6, 540, 528, 411, 435, 324 and 318 respectively.

The texture of compositions 3 to 6 was smoother than that of compositions 1 and 2 and in addition the fatty mouth feel of the latter was diminished particularly in compositions 5 and 6.

### Example 3

The compositions of Example 2 were evaluated as the filling in biscuits ("Petit Beukelaer"), 5g of each composition being pressed between two biscuits.

After one week of storage at ambient temperature the biscuits were tested. Biscuits made from compositions 1 and 2 had good eating properties but a fatty mouth feel. Biscuits made from compositions 3 to 6 also had pleasant eating properties but the fatty mouth feel was far less noticeable. After two weeks storage at ambient temperature the biscuits were tasted again when the taste assessment was unchanged, the biscuits remaining dry and crisp.

## Claims

1. A composition consisting essentially of a fat and a sweetener characterised in that
a) the composition contains erythritol and/or xylitol and fat in an amount of 95% (w/w) of the composition;
b) the composition contains 40 to 70% by weight erythritol and/or xylitol, based on the weight of fat plus erythritol and/or xylitol in the composition; for reducing the fatty mouth feel of said composition.

2. The use of erythritol and/or xylitol in a composition containing a fat in an amount sufficient to reduce the fatty mouth feel of said composition characterised in that the composition comprises erythritol and/or xylitol and fat in an amount of 95% (w/w) of the composition, and 40 to 70% by weight erythritol and/or xylitol, based on the weight of fat plus erythritol and/or xylitol in the composition.

3. The use of erythritol and/or xylitol according to claim 2, characterised in that said composition consists essentially of fat and a sweetener and, optionally, small amounts of additives e.g., flavours and/or preservatives.

4. A confectionery or bakery product comprising the composition of claim 1 as a filling.

## Patentansprüche

1. Zusammensetzung bestehend im Wesentlichen aus einem Fett und einem Süßungsmittel, dadurch gekennzeichnet, dass
a) die Zusammensetzung Erythrit und/oder Xylit und Fett in einer Menge von 95% (G/G) der Zusammensetzung enthält;
b) die Zusammensetzung 40 bis 70 Gew.-% Erythrit und/oder Xylit, bezogen auf das Gewicht von Fett plus Erythrit und/oder Xylit in der Zusammensetzung enthält,
um das fettige Mundgefühl der Zusammensetzung zu vermindern.

2. Verwendung von Erythrit und/oder Xylit in einer Zusammensetzung, die ein Fett enthält in einer Menge, die ausreicht, um das fettige Mundgefühl der Zusammensetzung zu vermindern, dadurch gekennzeichnet, dass die Zusammensetzung Erythrit und/oder Xylit und Fett in einer Menge von 95% (G/G) der Zusammensetzung und 40 bis 70 Gew.-% Erythrit und/oder Xylit, bezogen auf das Gewicht von Fett plus Erythrit und/oder Xylit in der Zusammensetzung umfasst.

3. Verwendung von Erythrit und/oder Xylit gemäß Anspruch 2, dadurch gekennzeichnet, dass die Zusammensetzung im Wesentlichen aus Fett und einem Süßungsmittel und gegebenenfalls geringen Mengen Additiven, z.B. Aromastoffen und/oder Konservierungsmitteln besteht.

4. Konditorei- oder Bäckereiprodukt umfassend die Zusammensetzung nach Anspruch 1 als Füllung.

## Revendications

1. Composition constituée essentiellement d'une graisse et d'un édulcorant, caractérisée en ce que
a) la composition contient de l'érythritol et/ou du xylitol et une graisse selon une quantité de 95 % (p/p) de la composition,
b) la composition contient 40 à 70 % en poids d'érythritol et/ou de xylitol, sur la base du poids de la graisse plus l'érythritol et/ou le xylitol dans la composition, pour réduire la sensation grasse dans la bouche de ladite composition.

2. Utilisation de l'érythritol et/ou du xylitol dans une composition contenant une graisse selon une quantité suffisante pour réduire la sensation grasse dans la bouche de ladite composition, caractérisée en ce que la composition comporte de l'érythritol et/ou du xylitol et une graisse selon une quantité de 95 % (p/p) de la composition, et 40 à 70 % en poids d'érythritol et/ou de xylitol, sur la base du poids de la graisse plus l'érythritol et/ou le xylitol dans la composition.

3. Utilisation d'érythritol et/ou de xylitol selon la revendication 2, caractérisée en ce que ladite camposition est constituée essentiellement d'une graisse et d'un édulcorant et, de manière facultative, de petites quantités d'additifs, par exemple des arômes et/ou des conservateurs.

4. Produit de confiserie ou de boulangerie comportant la composition selon la revendication 1 en tant que charge.
